# EUROPEAN PATENT SPECIFICATION

(11) **EP 1 410 561 B1**
(45) Date of publication and mention of the grant of the patent: **02.01.2008**
(21) Application number: 02751310.0
(22) Date of filing: 12.07.2002
(51) Int. Cl.: H04L 12/00

(54) **METHOD AND APPARATUS FOR CREATING CONNECTIONS IN NETWORKS**
VORRICHTUNG UND VERFAHREN ZUR VERBINDUNGSHERSTELLUNG IN NETZWERKEN
PROCEDE ET DISPOSITIF POUR LA CREATION DE CONNEXIONS DANS DES RESEAUX DYNAMIQUES

(30) Priority: 20.07.2001 EP 01306259
(43) Date of publication of application: 21.04.2004
(73) Proprietor: BRITISH TELECOMMUNICATIONS public limited company, London, Greater London EC1A 7AJ (GB)
(72) Inventor: SAFFRE, Fabrice Tristan Pierre, Ipswich, Suffolk IP5 2EQ (GB)
(74) Representative: Lloyd, Barry George William
(86) International application number: PCT/GB2002/003233
(87) International publication number: WO 2003/009524

(56) References cited:
- EP-A- 1 107 512
- US-A- 5 949 760
- US-A- 5 987 011
- US-A- 6 069 896

## Description

The present invention relates to a method and apparatus for creating links in networks. In particular but not exclusively, the invention is applicable to dynamic networks such as ad-hoc and/or parasitic networks which may be used as communications networks.

Dynamic network protocols have many applications some of which are short term and others more permanent. Short term networks might be deployed in a situation where a "high-tech" team (requiring reliable information exchange between sub-units) is deployed in a "low-tech" environment (featuring insufficient telecom infrastructure). Examples are:
- Scientific expeditions or natural resources survey in vast unpopulated areas;
- Humanitarian operations in third-world countries;
- "Search and rescue" missions when natural catastrophe has disabled normal communications or in remote areas; and
- Military operations.

A definition of an ad hoc network in *"*Routing in Ad Hoc Networks of Mobile Hosts", D.B. Johnson, Proceedings of the Workshop on Mobile Computing Systems and Applications, pages 158-163, 1994, is *"a collection of wireless mobile hosts forming a temporary network without the aid of any centralised administration or standard support services regularly available on the wide-area network to which the hosts may normally be connected'.* In general ad hoc networks provide robust and adaptive solutions to a variety of wireless communications-related problems. Applications may be short or long-term solutions i.e. temporary or permanent networks.

US 5,987,011 discloses a routing method for supporting ad-hoc mobile communications within a network. The method comprises measuring the stability of the communication links between neighbouring mobile hosts and selecting a communications route through the network based on the stability of the communications links.

A technical development that has an influence on topology is the ever-increasing role of wireless communication in data networks. Indeed, the future of mobile computing in general, and the use of 3G mobile phones as web-accessing devices in particular, will involve huge amounts of data being carried by radio waves rather than travelling along physical connections (see e.g. the "Bluetooth" architecture as summarised in Haartsen *et al.,* 1998, and its future developments as described in Lee and Lee, 2000). This provides a challenge to planning well-defined architecture for the global information network since, by definition, mobile devices keep moving from one base station to the next, which means the topology is continuously changing. As long as the higher level nodes are static and physically interconnected, it is likely that the effect will remain fairly limited. Yet more wireless links being created "on demand", not only between endpoints and base stations, but also between relays themselves. Furthermore, the trend to include "intelligent" functions in all kind of electronic devices is likely to result in what is today a simple endpoint (mobile phone) actually becoming the central relay of a miniature individual domain ("piconet"). It seems that this natural evolution toward a more transparent access to all kinds of online services will see ad hoc and parasitic networks gradually replacing static and well-differentiated architectures. All these reasonable projections about information networks strongly suggest that the Internet will progressively be turned into a vast collection of dynamic links between mobile, unspecialised nodes.

Such networks, termed peer to peer networks (p2p), are defined as distributed sets of client and server machines that have many peer relationships in addition to possible hierarchical or centralised connections. Designing the topology and connection rules for such p2p networks is therefore more difficult than existing networks and few established protocols exist for achieving optimised p2p network designs. For example, the Groove peer-to-peer platform utilises a broadcast messaging method to establish initial connections between local nodes.

Current p2p designs recognise the need for scalability (a known failure of systems like Gnutella), and methods exist to achieve this using partially centralised resources to act as relay services, (Examples include JXTA from SUN and Groove networks). The Gnutella network currently uses two methods for controlling connectivity and capacity for flooding. A client node can manually select the maximum number of connections allowed to itself and can also select the maximum time to live of the packet requests transmitted by the client, which limits flooding.

According to a first aspect of the invention, there is provided a node for a network having the features of claim 1.

According to a second aspect of the invention, there is provided a method of operation of a node in a network, the method having the features of claim 4.

According to an embodiment of the invention, there is provided a node having a connection (link) to one or more other nodes in a network, said node being operable in response to the or each link failing to identify other nodes with which a link may be formed, and to select one of said other nodes which to form a link on the basis of the connectivity of the other node. The node may preferentially select to form a link with the other node which currently has the most links or alternatively with the other node which is capable of forming the most links. In this context, therefore, the term connectivity refers to both the actual number of connections and/or the potential number of connections of a node. Advantageously, this link reallocation algorithm can be implemented as locally defined rules within a network, and therefore does not require global routing tables or knowledge of the overall network specific topology.

When one or more links of a node fail the relevant channels then become free and the node immediately begins to broadcast that information. Providing that all other nodes which also have a free channel respond to the broadcast, the first node can detect these and initiate a new connection. This results in considerably increased robustness for a given number of channels in the initial structure (because they can be reallocated when one of their endpoints fails, creating "on-demand" backups). Obviously, this is not possible if the links are physically implemented, but it is feasible in both wireless communication systems and logical structures like the WWW (relocation of web pages and hyperlinks.

The plasticity of "immaterial" networks, a direct consequence of allowing dynamic re-mapping of connections between existing nodes, has been emphasised by several authors, in the case of hyperlinks for example (Tadic, in press). Similarly, but focusing on the robustness issue, an obvious advantage of wireless networks on their physical counterpart is that a broken link is not, in essence, a dead connection: when one relay ceases to function, the communication channels it maintained with its first neighbours become available for initiating new links. SHINTo (Self-Healing Information Network Topology) tries to take advantage of this property to restore global cohesion after node failure, by advertising the fact that a channel is free and re-allocating new links. In contrast, in some prior art networks redundancy was used to improve the robustness of the network to node failure. Redundancy means the provision of additional links between nodes so that several routes exist between end points. Accordingly, the failure of one node does not necessarily mean that a route between two other nodes has been broken since additional routes between the nodes exist. However, the implementation of wide scale redundancy throughout a network can be expensive and therefore an unattractive option, particularly if some of the extra links are not used and remain idle. In fact, SHINTo shares several common traits with this basic form of redundancy in that it can provide alternative routes between end points in the event of link failure. However, its main advantage is that it is only invoked when necessary (and therefore doesn't require idle connections to be maintained in normal circumstances).

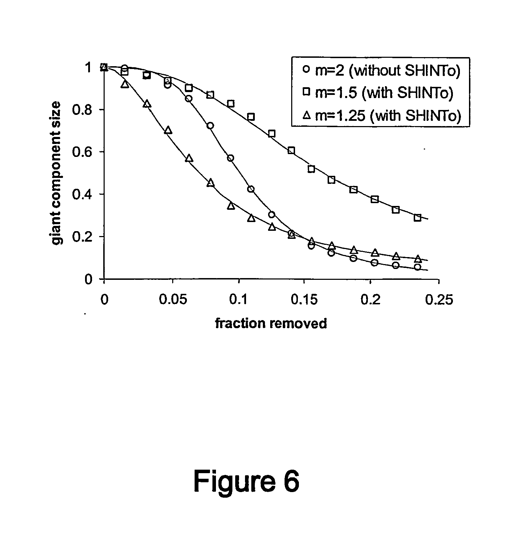

In fact, a highly effective solution is the combination of the reallocation algorithm with partial redundancy (for example, one extra link for every four nodes). The reallocation algorithm demonstrates that the application of local decision rules in a partially redundant topology can not only effectively replace systematic link backup, but actually outperforms it in terms of overall robustness (see Figure 6 later). Furthermore, the reconnection algorithm is not complex and can be implemented in individual nodes at a negligible cost, particularly compared to that of large-scale redundancy.

Embodiments of the present invention will now be described by way of example with reference to the accompanying drawings in which:
figure 1 is a schematic representation of nodes in a network;
figure 2 is a schematic representation of the largest set of interconnected nodes in a network after the network has been subjected to node linkage failure;
figure 3 flow charts illustrating the behaviour of a node illustrated in a network according to an embodiment of the present invention;
figure 4 is a schematic representation of the largest set of interconnected nodes in a network after the network has been subjected to node linkage failure where the nodes operate according to an embodiment of the present invention; and
figures 5a, 5b and 6 are graphs illustrating the performance of networks having nodes according to an embodiment of the invention relative to networks comprised of other nodes.

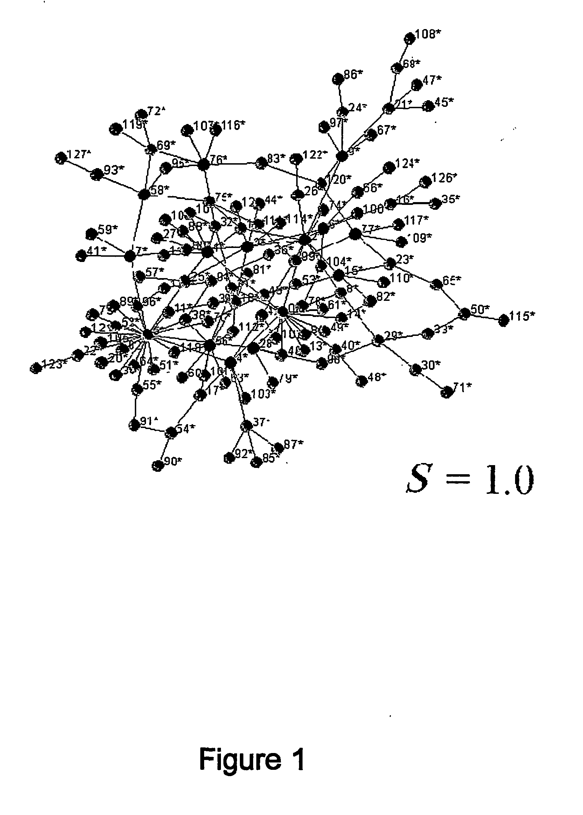

Figure 1 is a schematic representation of a network A comprising 128 nodes 1-128. Each node is connected by links (shown in figure 1 as lines between the nodes 1-128) to one or more other nodes to provide the network. Furthermore, each of the nodes 1-128 is mobile and has a limited range over which it can communicate with other nodes 1-128 in the network A. Over time nodes will move relative to each other resulting in the possibility of a given node moving in out of range with other nodes in the network A with which it is connected. This will result in one or more of the connections between the nodes being broken or lost. In other words, the topology (connection pattern) of the network A is dynamic.

In addition to nodes moving out of range of the connected nodes, connections may also be lost for other reasons. For example, a node may breakdown or be switched off or simply drop its capacity to maintain network connection because it requires its system resources for other tasks. Similarly, one or more nodes could be the target of an attack with the purpose of affecting the functioning of the network.

Regardless of the reasons for the connection failures, as they occur, the network topology changes. The network can even be split into a number of sub-networks. The more connections are lost, the less useful the network since it connects fewer nodes with fewer links and thus has a reduced capacity. In the present embodiment, a measure of the decay of the network is obtained from S = n'/n, where S is the fractional size of the largest sub-group of interconnected nodes in the network, n being the total number of nodes in the network and n' being the number of interconnected nodes in the largest sub-network. Therefore, for the network A in figure 1, S = 1.0. Observation of the evolution of S in response to a predetermined number of node failures (i.e. nodes losing their connections for the reasons outlined above) therefore gives a measure of the decay of the network.

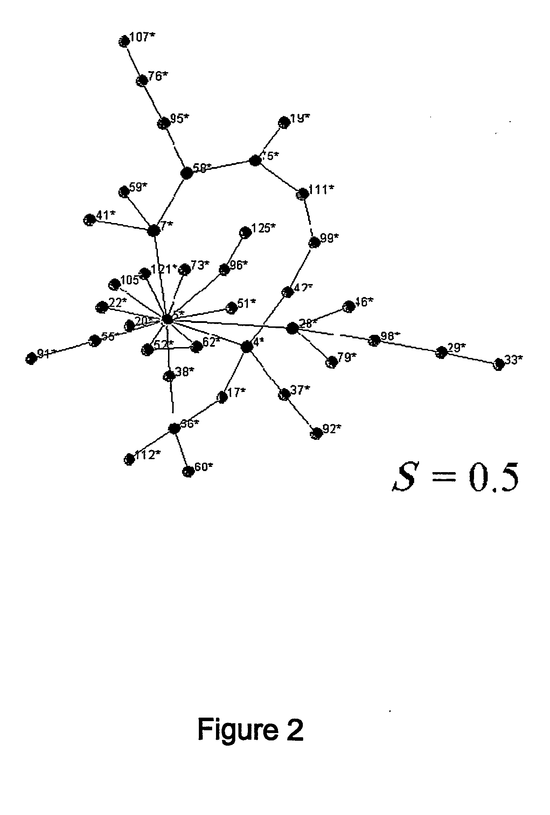

Figure 2 illustrates the same network A as figure 1 after it has been subjected to fifty node failures. Figure 2 shows only the largest of the sub-networks into which the original network has developed. In other words, the isolated nodes or groups of nodes are not shown. The value of S for the network A in the state shown in figure 2 is 0.5. In other words, the effective network size has reduced to 50% of the maximum possible. This level of decay of the network A will result in a very significant drop in the capacity and coverage of the network.

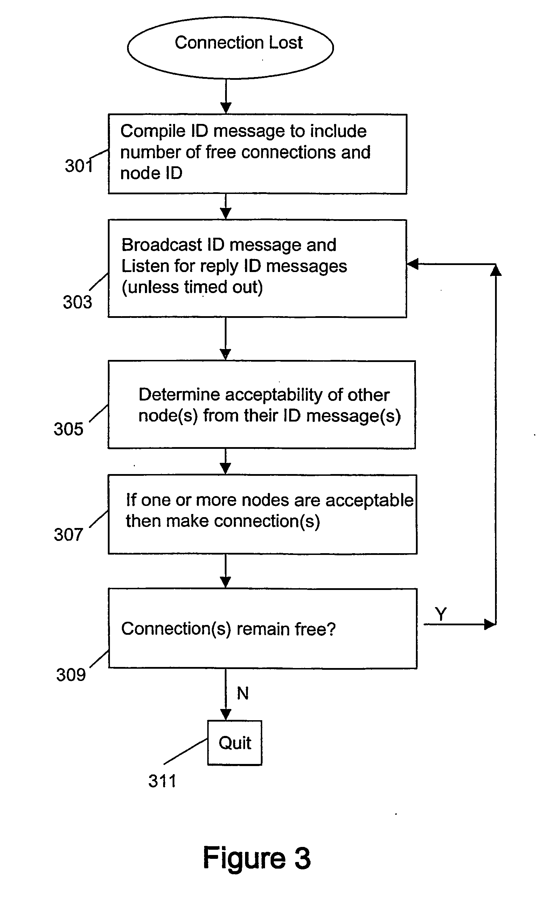

In the present embodiment however, each node is programmed to react to the loss of one or more connections and to initiate attempt to reconnect to the network. Figure 3 shows a flow chart which represents the programmed behaviour of each node that is triggered by the loss of one or more connections at a given node. As noted above, each node starts the process when the loss (for whatever reason) of a link is detected and the processing starts at step 301. In step 301, the node compiles a message which includes the nodes unique identifier (ID) in the network and the number of free connections the node has. Processing then moves to step 303 at which the ID message is broadcast to all nodes within range and the node listens for any incoming ID messages from other nodes indicating that they have a spare link. All nodes are programmed to listen for ID messages when they have a spare link. Processing then moves to step 305 at which the incoming ID messages are analysed.

The node can act in one of three modes in response to the analysed messages. In the first mode the node will make links with each other node as the messages arrive until the node has replaced all the failed links. In the second mode, if after a predetermined period the node has received a greater number of ID messages than the node has links to repair then the node forms links first with those other nodes that have most links. In the third node, if after a predetermined period the node has received a greater number of ID messages than the node has links to repair than the node forms links first with those other nodes that have the capability of forming the most links. Each of the three modes can prove more effective in different circumstances. The connections with the accepted nodes are made at step 307.

Processing then moves to step 309 where a check is carried out to see if any links remain free. If not, processing moves to step 311 and ends. If free links remain then processing returns to step 303 and process of steps 303, 305, 307 and 309 repeats. After a predetermined time however, if processing return to step 303 the processing quits by jumping to step 311. This timeout avoids nodes broadcasting indefinitely when there are no other nodes within range that have a free link also.

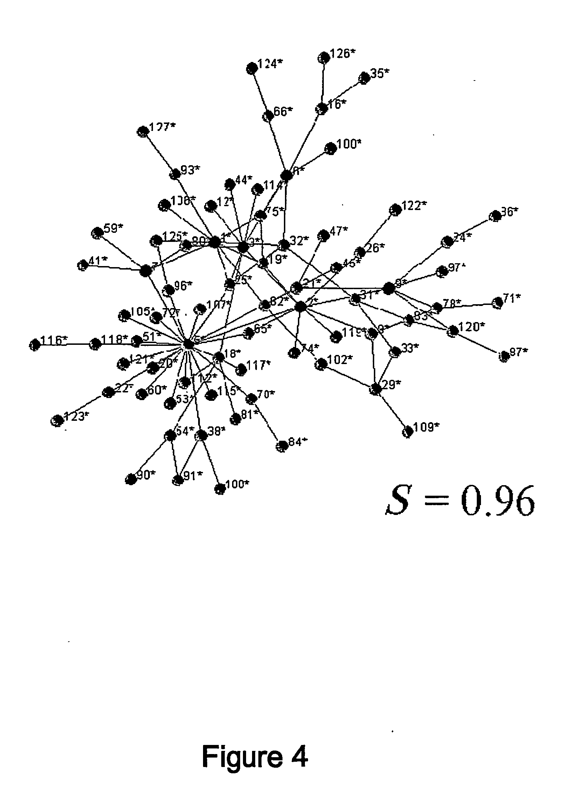

Figure 4 shows a repeat of the results of fifty node failures on the network A except that in this case the nodes in the network have been programmed to behave in accordance with the algorithm illustrated with reference to figure 3. As is evident from figure 4, the network has degraded to a much smaller degree that the network of figure 2. In fact, the decay can be observed for this network with reference to S = 0.96. In other words the network has only reduced to 96% of its maximum possible size.

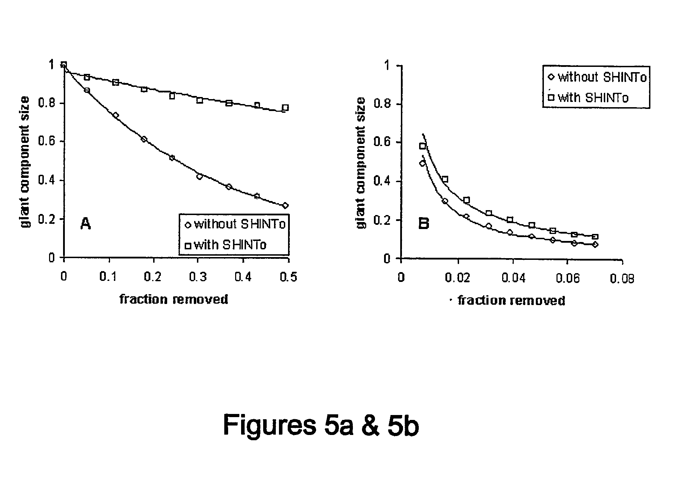

Figures 5a and 5b are graphs which show a comparison between the cohesion (or decay) of networks either implementing the reconnection procedure in the third mode (labelled "with SHINTo") or not, when submitted to random failure of nodes (figure 5a) and attacks directed at particular nodes (figure 5b). The graph show the size of the giant component (i.e. the largest set of interconnected nodes) as a proportion of the network remaining after various fractions of the original network of nodes have been removed. These comparisons show that the reallocation procedure proves capable of increasing network robustness to a considerable extent. On average, it manages to raise the size of the giant component of a typical scale free network by more than a factor 2 when only 50% of the vertices are left (see figure 5a). This result is particularly good when considering that only local information is used and no "global emergency reconnection plan" is invoked in the process. Taking into account the difficulty of planning appropriate response to relay failure in complex architectures, this kind of self-reconstruction appears useful because of its simplicity. Indeed, since one only has to fit every node with the corresponding adaptive behaviour to maintain the same level of cohesion, this decentralised solution need not take into account the combinatory explosion usually encountered in network management.

In order to reallocate a broken link, each node has to find a new partner. Often, it is found among those who have also obtained a free channel through the disappearance of the same relay or node, which happens to be a common neighbour. If the reconnection rule is kept simple, for example by operating in the first mode, and many nodes only maintain a single link with the original network (*m*=1), this might sometimes result in the unfortunate situation where 2 endpoints bind together, forming an isolated dipole in the network. Obviously, this is no good for the cohesion of the giant component, since all those "couples" actually form as many isolated systems that are in fact separated from the main network. The reallocation algorithm operating in the second mode alleviates this problem because of the non-linearity embedded in the reconnection rule, whereby those potential partners which are more highly connected (secondary relays) are also more likely to be selected. Yet when the total number of links is equal to the number of nodes minus one (no redundancy), the options can effectively be extremely limited, and can still lead to unavoidable splitting of the network.

On the other hand, partial redundancy alone in the network fails to strongly increase robustness because there is no guarantee that alternative links are suitably located (from a topological point of view) to backup critical relays, and therefore capable of limiting the impact of the removal of these relays on the size of the giant component.

In a wireless environment implementing a dynamic reallocation algorithm, those potentially ineffective backup connections can often be remapped into a more suitable topology. Consequently, combining the reallocation algorithm with partial redundancy in the network provides a successful strategy.

Figure 6 is a graph showing the relative performance of a fully redundant (m = 2, where m is the average number of links per node) but non-dynamic architecture (without SHINTo) compared with the use of the dynamic reallocation algorithm described above (operating in the second mode) in a partially redundant environment (1<m<2). The graph shows how the giant component size varies with the fraction of network removed when submitted to directed attack. These simulations show that the reallocation algorithm described in the above embodiment operating in a partially redundant architecture (m=1.5 and m=1.25) is able to outperform a stronger redundancy (m=2) which does not implement dynamic reallocation of broken links.

The application of the reallocation algorithm can progressively turn a scale free network (sensitive to attack) into a random network (more resistant), when subject to directed attack. This is because the most highly connected nodes are targeted first and, in the case that the nodes cannot have more links than they originally had, the reallocation algorithm (even operating in the second node for preferentially reconnecting to highly connected nodes) cannot succeed in rebuilding a scale-free network because of constraints on the number of links per node. This consequently results in a gradually more random topology. The reallocation algorithm can also strongly reduce the effect of random failure on the relative size of the giant component. In short, a wireless scale free network implementing the dynamic link reallocation algorithm behaves like a random network when under attack, and even better than a conventional scale free network when suffering from random node failure.

The inventors have established the optimum value for N (the number of links that a node can form) is thought to be 3 links. This figure maintains high levels of cohesion in the face of dynamic node creation and removal or failure. It also provides a low path length between any two nodes, see table of results. Note that for the single connection case the network is completely severed by the node failures, hence the path lengths are of no value.

There is also another element on which we didn't insist in the detailed description of our preliminary findings, because we chose to focus on the most traditional definition of robustness (resilience to attack/failure). Yet it should also be emphasised now that in wireless networks of mobile hosts, this particular problem is closely related to the more general issue of topological plasticity. Indeed, in an architecture where relays and/or endpoints are constantly moving within and out of range of each other, links are not only broken when nodes cease to function, but as a part of normal network operation. In this context, the repair algorithm has a much wider field of application than protection against attack/failure.

It will be understood by those skilled in the art that the apparatus that embodies the invention could be a general purpose device having software arranged to provide the an embodiment of the invention. The device could be a single device or a group of devices and the software could be a single program or a set of programs. Furthermore, any or all of the software used to implement the invention can be contained on various transmission and/or storage mediums such as a floppy disc, CD-ROM, or magnetic tape so that the program can be loaded onto one or more general purpose devices or could be downloaded over a network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A node for a network, said node being operable to maintain a link to one or more other nodes in a network and being further operable, in response to the or each link failing, to:
identify a plurality of other nodes with which a link may be formed; and
select from the plurality of identified other nodes a node with which to form a link,
**characterised in that** selection is performed on the basis of which other node has the most links or the capability of forming the most links.

2. A node according to claim 1 which is further operable, in response to the or each link failing, to transmit a message to the other nodes in the network identifying the node and the fact that a link can be formed therewith.

3. A node according to any of claims 1 or 2 in which the node is operable in response to the receipt of a message from another node, to identify that other node as a candidate for forming a link.

4. A method of operation of a node in a network, comprising the steps of:
maintaining a link to one or more other nodes in the network; and
in response to the or each link failing, to:
identify a plurality of other nodes with which a link may be formed (305); and
select from the plurality of identified other nodes a node with which to form a link (307), **characterised in that** selection is performed on the basis of which other node has the most links or the capability of forming the most links.

5. A method according to claim 4, further comprising the step of:
in response to the or each link failing, transmitting a message to the other nodes in the network identifying the node and the fact that a link can be formed therewith (303).

6. A method according to either of claims 4 or 5, further comprising the step of:
in response to the receipt of a message from another node, to identify that other node as a candidate for forming a link.

7. A storage medium carrying computer readable code representing instructions for causing a device having a processor to operate as a node according to any of claims 4 to 6 when said instructions are executed by the processor.

8. A computer data signal embodied in a carrier wave and comprising instructions for causing a device having a processor to operate as a node according to any of claims 4 to 6 when the instructions are executed by the processor.

9. A storage medium carrying computer readable code representing instructions for causing a device having a processor to indicate connections to or from nodes of a network comprising a plurality of nodes operating according to any of claims 4 to 6 when said instructions are executed by the processor.

10. A computer data signal embodied in a carrier wave and comprising instructions for causing a device having a processor to indicate connections to or from nodes of a network comprising a plurality of nodes operating according to any of claims 4 to 6 when the instructions are executed by the processor.

## Patentansprüche

1. Knoten für ein Netzwerk, wobei der Knoten betriebsfähig ist, eine Verbindung zu einem oder mehreren anderen Knoten in einem Netzwerk zu unterhalten, und weiter betriebsfähig ist, als Reaktion darauf, dass die oder jede Verbindung ausfällt:
eine Vielzahl von anderen Knoten zu identifizieren, mit denen eine Verbindung gebildet werden kann; und
aus der Vielzahl von identifizierten anderen Knoten einen Knoten zu wählen, mit dem eine Verbindung zu bilden ist, **dadurch gekennzeichnet, dass** die Auswahl durchgeführt wird auf der Basis, welcher andere Knoten die meisten Verbindungen hat oder die Fähigkeit zur Bildung der meisten Verbindungen.

2. Knoten gemäß Anspruch 1, der weiter betriebsfähig ist, als Reaktion darauf, dass die oder jede Verbindung ausfällt, eine Nachricht an die anderen Knoten in dem Netzwerk zu senden, die den Knoten und die Tatsache identifiziert, dass mit diesem eine Verbindung gebildet werden kann.

3. Knoten gemäß einem der Ansprüche 1 oder 2, wobei der Knoten betriebsfähig ist, als Reaktion auf den Empfang einer Nachricht von einem anderen Knoten, diesen anderen Knoten als einen Kandidaten zur Bildung einer Verbindung zu identifizieren.

4. Verfahren zum Betreiben eines Knotens in einem Netzwerk, das die Schritte aufweist:
Unterhalten einer Verbindung mit einem oder mehreren anderen Knoten in dem Netzwerk; und
als Reaktion darauf, dass die oder jede Verbindung ausfällt: eine Vielzahl von anderen Knoten zu identifizieren, mit denen eine Verbindung gebildet werden kann (305); und
aus der Vielzahl von identifizierten anderen Knoten einen Knoten zu wählen, mit dem eine Verbindung zu bilden ist (307), **dadurch gekennzeichnet, dass** die Auswahl durchgeführt wird auf der Basis, welcher andere Knoten die meisten Verbindungen hat oder die Fähigkeit zur Bildung der meisten Verbindungen.

5. Verfahren gemäß Anspruch 4, das weiter den Schritt aufweist:
als Reaktion darauf, dass die oder jede Verbindung ausfällt, Senden einer Nachricht an die anderen Knoten in dem Netzwerk, die den Knoten und die Tatsache identifiziert, dass mit diesem eine Verbindung gebildet werden kann (303).

6. Verfahren gemäß einem der Ansprüche 4 oder 5, das weiter den Schritt aufweist:
als Reaktion auf den Empfang einer Nachricht von einem anderen Knoten Identifizieren dieses anderen Knotens als einen Kandidaten zur Bildung einer Verbindung.

7. Speichermedium, das einen Computer-lesbaren Code trägt, der Anweisungen repräsentiert, um eine Vorrichtung mit einem Prozessor zu veranlassen, als ein Knoten gemäß einem der Ansprüche 4 bis 6 zu arbeiten, wenn die Anweisungen durch den Prozessor ausgeführt werden.

8. Computerdatensignal, das in einer Trägerwelle enthalten ist und Anweisungen aufweist, um eine Vorrichtung mit einem Prozessor zu veranlassen, als ein Knoten gemäß einem der Ansprüche 4 bis 6 zu arbeiten, wenn die Anweisungen durch den Prozessor ausgeführt werden.

9. Speichermedium, das einen Computer-lesbaren Code trägt, der Anweisungen repräsentiert, um eine Vorrichtung mit einem Prozessor zu veranlassen, Verbindungen zu oder von anderen Knoten eines Netzwerks anzuzeigen, das eine Vielzahl von Knoten aufweist, die gemäß einem der Ansprüche 4 bis 6 arbeiten, wenn die Anweisungen durch den Prozessor ausgeführt werden.

10. Computerdatensignal, das in einer Trägerwelle enthalten ist und Anweisungen aufweist, um eine Vorrichtung mit einem Prozessor zu veranlassen, Verbindungen zu oder von anderen Knoten eines Netzwerks anzuzeigen, das eine Vielzahl von Knoten aufweist, die gemäß einem der Ansprüche 4 bis 6 arbeiten, wenn die Anweisungen durch den Prozessor ausgeführt werden.

## Revendications

1. Noeud pour un réseau, ledit noeud pouvant être mis en oeuvre pour maintenir une liaison vers un ou plusieurs autres noeuds dans un réseau et pouvant en outre être mis en oeuvre, en réponse à la panne de la liaison ou à chaque panne de liaison pour :
identifier une pluralité d'autres noeuds avec lesquels une liaison peut être formée, et
sélectionner à partir de la pluralité d'autres noeuds identifiés un noeud avec lequel former une liaison, **caractérisé en ce que** la sélection est exécutée sur la base de quel autre noeud a le plus de liaisons ou la capacité de former le plus de liaisons.

2. Noeud selon la revendication 1, qui peut en outre être mis en oeuvre, en réponse à la panne de la liaison ou à chaque panne de liaison, pour transmettre un message aux autres noeuds du réseau identifiant le noeud et le fait qu'une liaison peut être formée avec celui-ci.

3. Noeud selon l'une quelconque des revendications 1 à 2, où le noeud peut être mis en oeuvre en réponse à la réception d'un message provenant d'un autre noeud, pour identifier cet autre noeud en tant que candidat pour former une liaison.

4. Procédé de mise en oeuvre d'un noeud dans un réseau, comprenant les étapes consistant à :
maintenir une liaison vers un ou plusieurs autres noeuds du réseau, et
en réponse à la panne de la liaison ou à chaque panne de liaison :
identifier une pluralité d'autres noeuds avec lesquels une liaison peut être formée (305), et
sélectionner à partir de la pluralité d'autres noeuds identifiés un noeud avec lequel former une liaison (307), **caractérisé en ce que** la sélection est exécutée sur la base de quel autre noeud a le plus de liaisons ou la capacité de former le plus de liaisons.

5. Procédé selon la revendication 4, comprenant en outre l'étape consistant à :
en réponse à la panne de la liaison ou à chaque panne de liaison, transmettre un message aux autres noeuds du réseau identifiant le noeud et le fait qu'une liaison peut être formée avec celui-ci (303).

6. Procédé selon l'une ou l'autre des revendications 4 et 5, comprenant en outre l'étape consistant à :
en réponse à la réception d'un message provenant d'un autre noeud, identifier cet autre noeud en tant que candidat pour former une liaison.

7. Support de mémorisation portant un code lisible par un ordinateur représentant des instructions destinées à amener un dispositif comportant un processeur à fonctionner en tant que noeud selon l'une quelconque des revendications 4 à 6, lorsque lesdites instructions sont exécutées par le processeur.

8. Signal de données informatiques incorporé dans une onde porteuse et comprenant des instructions destinées à amener un dispositif comportant un processeur à fonctionner en tant que noeud selon l'une quelconque des revendications 4 à 6, lorsque les instructions sont exécutées par le processeur.

9. Support de mémorisation portant un code lisible par un ordinateur représentant des instructions destinées à amener un dispositif comportant un processeur à indiquer des connexions vers et depuis des noeuds d'un réseau comprenant une pluralité de noeuds fonctionnant selon l'une quelconque des revendications 4 à 6 lorsque lesdites instructions sont exécutées par le processeur.

10. Signal de données informatiques incorporé dans une onde porteuse et comprenant des instructions destinées à amener un dispositif comportant un processeur à indiquer des connexions vers et depuis des noeuds d'un réseau comprenant une pluralité de noeuds fonctionnant selon l'une quelconque des revendications 4 à 6 lorsque les instructions sont exécutées par le processeur.
